# EUROPÄISCHE PATENTANMELDUNG

(11) **EP 2 028 084 A2**
(43) Veröffentlichungstag der Anmeldung: **25.02.2009**
(21) Anmeldenummer: 08161205.3
(22) Anmeldetag: 25.07.2008
(51) Int. Cl.: B62D 33/02

(54) **Rungenstock**

(30) Priorität: 23.08.2007 DE 102007039933
(71) Anmelder: Papp, Johann Christian, 94347 Ascha (DE)
(72) Erfinder: Papp, Johann Christian, 94347 Ascha (DE)
(74) Vertreter: Schurack, Eduard F.

(57) **Zusammenfassung**

Die vorliegende Erfindung betrifft einen Rungenstock umfassend einen Rungenschemel (24), der ein erstes und ein zweites Ende aufweist, und eine erste und eine zweite Runge (12, 14), wobei die erste Runge (12) mit dem ersten Ende des Rungenschemels (24) und die zweite Runge (14) mit dem zweiten Ende des Rungenschemels (24) gekoppelt ist, wobei die erste und die zweite Runge (12, 14) derart klappbar mit dem jeweiligen Ende des Rungenschemels (24) gekoppelt sind, dass beide Rungen (12, 14) gleichzeitig einklappbar sind.

## Beschreibung

Die vorliegende Erfindung betrifft einen Rungenstock umfassend einen Rungenschemel, der ein erstes und ein zweites Ende aufweist, und eine erste und eine zweite Runge, wobei die erste Runge mit dem ersten Ende des Rungenschemels und die zweite Runge mit dem zweiten Ende des Rungenschemels gekoppelt ist.

Derartige Rungenstöcke werden üblicherweise auf der Ladefläche von einem LKW oder einem Anhänger montiert und werden überwiegend im Holztransport, jedoch auch in anderen Bereichen, beispielsweise beim Transport von Stahlträgern und dergleichen, eingesetzt. Insbesondere bei einem Einsatz zum Holztransport ergeben sich zahlreiche Nachteile: Da der Einsatzort im Wald naturgemäß laufend wechselt, ergeben sich einerseits Probleme beim Auffinden des Einsatzortes, andererseits sind die Platzverhältnisse am Einsatzort gewöhnlich nicht bekannt. Da die Gesamtlänge aus LKW und Anhänger häufig mehr als 18 m beträgt, und damit, wenn sich der Fahrer im Wald verfährt, ein Rangieren nahezu unmöglich ist, wird üblicherweise zunächst beim erstmaligen Aufsuchen des Einsatzortes der Anhänger außerhalb des Waldes geparkt. Erst nach dem Auffinden des Einsatzortes wird in einem zweiten Schritt der Anhänger am Abstellort an den LKW angekoppelt und anschließend die Kombination aus LKW und Anhänger zum Einsatzort gefahren. Dies ist umständlich, kostet Zeit und zusätzlichen Kraftstoff.

Der vorliegenden Erfindung liegt deshalb die Aufgabe zugrunde, einen Rungenstock der eingangs genannten Art derart weiterzubilden, dass dadurch die Bedienung von mit derartigen Rungenstöcken ausgestatteten LKWs und/oder Anhängern, insbesondere beim Einsatz in der Holzwirtschaft, vereinfacht wird.

Diese Aufgabe wird gelöst durch einen Rungenstock mit den Merkmalen von Patentanspruch 1.

Der vorliegenden Erfindung liegt die Erkenntnis zugrunde, dass diese Aufgabe gelöst werden kann, wenn erreicht werden kann, dass einer mit Rungenstöcken ausgestatteter Anhänger auf der Ladefläche eines mit Rungenstöcken ausgestatteten LKWs transportiert werden kann. Dafür ist bevorzugt ein Kran am LKW vorgesehen, der auch dem Aufladen von Baumstämmen dient. Dabei ist es keinesfalls ausreichend, dass von den beiden Rungen eines Rungenstocks lediglich eine Runge abgeklappt werden kann. Denn wenn die andere Runge im aufgestellten Zustand verbleibt, ergibt sich eine Gesamthöhe aus LKW und darauf geladenem Anhänger von mehr als 4,50 m, die bei der gegenwärtigen Gesetzeslage nicht erlaubt ist. Werden hingegen, wie bei der vorliegenden Erfindung, beide Rungen derart klappbar mit dem jeweiligen Ende des Rungenschemels gekoppelt, dass beide Rungen gleichzeitig abklappbar sind, so ergibt sich eine Gesamthöhe aus LKW und geladenem Anhänger von weniger als 4 m.

Würde bei einem Rungenstock nur eine Runge klappbar ausgebildet sein, könnte die maximal erlaubte Gesamthöhe von 4 m nur dann eingehalten werden, wenn aufwändige Umbaumaßnahmen am LKW vorgenommen würden zum Zwecke des Schaffens von Platz für die Räder des Anhängers. Dazu müssten insbesondere der Batteriekasten und der Luftkessel abgesenkt werden; Spezialtanks für Kraftstoff und Hydrauliköl, sowie weitere aufwändige Umbauarbeiten am LKW wären nötig.

Durch die vorliegende Erfindung wird nicht nur die Wendigkeit der Kombination aus LKW und Anhänger bei Leerfahrten erhöht und werden langwierige, nervenaufreibende Rangierfahrten minimiert, sondern es wird auch eine deutliche Minderung des Kraftstoffverbrauchs und des Brems- und Reifenverschleißes erreicht. So lässt sich in einem bevorzugten Ausführungsbeispiel der Dieselverbrauch von 39 I auf 36 I pro 100 km senken. Hinzu kommt, dass die Kombination aus LKW und Anhänger im unbeladenen Zustand im Straßenverkehr ebenso wie auf Abstellplätzen statt der in einem Ausführungsbeispiel benötigten 18,75 m Länge nur 10,20 m benötigt und somit ein etwaiges Unfallrisiko deutlich gemindert wird. Dies liegt daran, dass beispielsweise das Überqueren von Straßen, das Einbiegen in diese, das Überholen sowie das Überholtwerden auf der Basis der vorliegenden Erfindung deutlich weniger Zeit beansprucht.

Gemäß der vorliegenden Erfindung kann überdies der Anhänger auf beiden Seiten des LKWs abgeladen werden, je nach dem zur Verfügung stehenden Raum. Diese Möglichkeit wäre bei nur einer klappbar ausgebildeten Runge pro Rungenstock nicht gegeben. Dort müsste der Anhänger von der Seite abgeladen werden, auf die er aufgeladen wurde. Insbesondere im unwegsamen Gelände bietet die Erfindung hier aufgrund dieses Flexibilitätszuwachses einen unschätzbaren Vorteil.

Schließlich ergibt sich bei Leerfahrten eine deutliche Mautersparnis auf mautpflichtigen Straßen, da anstelle von fünf Achsen nur zwei Achsen bezahlt werden müssen.

Gemäß einer bevorzugten Ausführungsform ist die erste und die zweite Runge derart klappbar mit dem jeweiligen Ende des Rungenschemels gekoppelt, dass beide Rungen im abgeklappten Zustand nebeneinander anordenbar sind. Dadurch lässt sich eine minimale Gesamthöhe der Kombination aus LKW und darauf geladenem Anhänger erzielen.

Wenngleich vorgesehen werden könnte, dass sich die eine Runge in eine Aussparung der anderen Runge einfügt, um ein gleichzeitiges Abklappen beider Rungen zu ermöglichen, so besteht die kostengünstigste Alternative jedoch darin, dass die erste Runge und/oder die zweite Runge im abgeklappten Zustand um einen vorgebbaren Winkel gegenüber dem Rungenschemel verschwenkt ist. Dadurch lassen sich nämlich Standard-Rungen verwenden, die zu günstigeren Preisen erhältlich sind als speziell ausgebildete Rungen. Wenngleich vorgesehen sein könnte, dass eine Runge ohne Schwenkwinkel, die andere dafür mit einem etwas größeren Schwenkwinkel abklappbar ausgebildet ist, so ist dennoch bevorzugt, dass beide Rungen im abgeklappten Zustand um einen vorgebbaren Winkel gegenüber dem Rungenschemel verschwenkt sind. Dabei ist die eine Runge in die eine Richtung des Rungenschemels, die andere Runge in die andere Richtung des Rungenschemels verschwenkt. Dadurch lässt sich eine vergleichsweise stabile Anordnung erzielen; die Modifikationen, um bei beiden Rungen ein Schwenken zu ermöglichen, sind bei beiden Rungen dieselben, so dass sich eine günstigere Realisierung ergibt.

Bevorzugt beträgt der Betrag des vorgebbaren Schwenkwinkels zwischen 3 Grad und 20 Grad, noch bevorzugter zwischen 3 Grad und 8 Grad.

Bei der Realisierung der vorliegenden Erfindung ist es besonders bevorzugt, dass mindestens ein Ende des Rungenschemels eine Außenfläche in einem Winkel zur Längserstreckung des Rungenschemels aufweist, der 90 Grad +/- dem vorgebbaren Winkel entspricht. Dies kann erreicht werden, indem beispielsweise von einem normalen, handelsüblichen Rungenschemel auf jeder Seite ein Ende schräg, d. h. in dem vorgebbaren Winkel, abgetrennt wird.

Bevorzugt umfasst die Kopplung mindestens einer Runge mit dem zugehörigen Ende des Rungenschemels ein mit dem Ende des Rungenschemels gekoppeltes Klappscharnier und eine mit dem Klappscharnier gekoppelte Rungentasche, wobei die Runge in die Rungentasche eingesetzt ist, wobei das Klappscharnier gegenüber dem Rungenschemel in dem vorgebbaren Winkel angeordnet ist. Bei der Realisierung dieser Variante wird das zuvor erwähnte schräge Abtrennen eines Endes eines handelsüblichen Rungenschemels in einem Abstand vorgenommen, der im Wesentlichen der Längserstreckung des Klappscharniers entspricht. Da sich der vorgebbare Winkel in der Montage des Klappscharniers an dem Rungenschemel widerspiegelt, kann eine Standardrungentasche in das Klappscharnier eingesetzt werden, um darin die Runge aufzunehmen.

Bevorzugt weist die Kopplung der Runge mit dem zugehörigen Ende des Rungenschemels eine Aufnahme für eine Bedienvorrichtung zum Auf- und Abklappen der Runge auf. Diese ist bevorzugt so angeordnet, dass sie bei aufgeklappter Runge in einem Winkel von im Wesentlichen 30 bis 60 Grad, bevorzugt 45 Grad nach unten weist. Dadurch kann die Bedienvorrichtung unter Bereitstellung eines ausreichenden Hebelarms bei aufgeklappter Runge bequem eingesetzt und bei abgeklappter Runge bequem wieder abgezogen werden und umgekehrt.

Bevorzugt ist weiterhin eine Federvorrichtung vorgesehen, die derart mit der Runge einerseits, bevorzugt mit der Rungentasche, und dem Rungenschemel andererseits gekoppelt ist, dass das Aufklappen der Runge durch die Federvorrichtung unterstützt wird.

Gemäß einem weiteren Aspekt der vorliegenden Erfindung wird eine Runge bereitgestellt, die eine Teleskopiervorrichtung aufweist, die einen in der Runge angeordneten Teleskopausschub umfasst. Eine derartige Runge kann besonders vorteilhaft mit einem erfindungsgemäßen Rungenstock eingesetzt werden, lässt sich jedoch auch unabhängig davon, d.h. bei nicht klappbaren Rungenstöcken, verwenden, wie für den Fachmann offensichtlich ist. Diese eröffnet die Möglichkeit, bei Einhaltung einer maximal zulässigen Fahrzeugbreite von 2,55 m dennoch eine Ladehöhe des Ladeguts von mehr als dieser Breite zu ermöglichen. In einem bevorzugten Ausführungsbeispiel lässt sich durch den Teleskopausschub eine zusätzliche Höhe der aufgeklappten, damit ausgestatteten Runge von 27 cm erzielen. In einer einfachen, kostengünstigen Variante ist dazu weiterhin eine manuelle Klemmvorrichtung vorgesehen, um den Teleskopausschub zumindest in ausgeschobener Stellung lagefest zur Runge zu klemmen.

Gemäß einer bevorzugten Ausführungsform ist jedoch weiterhin eine Schubstange vorgesehen, die einerseits mit dem Teleskopausschub gekoppelt ist und andererseits an einem Anschlag für die Schubstange abgestützt ist, derart, dass beim Aufklappen der Runge der Teleskopausschub aus der Runge ausgeschoben wird. Umgekehrt wird beim Abklappen der Runge der Teleskopaufsatz in die Runge eingeschoben. Dadurch lassen sich zwei zeitaufwändige Prozesse kombinieren, was in einer deutlichen Zeitersparnis resultiert, wenn man die Vielzahl an Rungen betrachtet, die in Summe an einem LKW und an einem Anhänger montiert sind.

Bevorzugt ist der Anschlag für die Schubstange lagefest mit dem Rungenschemel gekoppelt. Weiterhin ist bevorzugt, wenn die Schubstange ein Gelenk aufweist, um ein Abknicken der Schubstange zu ermöglichen. Durch diese Maßnahme kann die Schubstange über den gesamten Klappwinkel, der in etwa 90 Grad beträgt, ihre Aufgabe erfüllen.

Bei einer noch bevorzugteren Weiterbildung ist ein Pneumatik- oder Hydraulikzylinder vorgesehen, der derart mit dem Teleskopausschub gekoppelt ist, dass bei Beaufschlagung des Pneumatik- oder Hydraulikzylinders der Teleskopausschub aus der Runge ausgeschoben wird. Dadurch wird der kraftaufwändige manuelle Prozess der Teleskopierung deutlich vereinfacht und beschleunigt. Bevorzugt ist dabei der Pneumatik- oder Hydraulikzylinder in der Runge angeordnet.

Besonders bevorzugt ist dabei weiterhin ein Seil vorgesehen, das einerseits mit dem Teleskopausschub gekoppelt ist und andererseits, bevorzugt über eine Umlenkrolle, mit dem Rungenschemel gekoppelt ist, derart, dass beim Beaufschlagen des Pneumatik-oder Hydraulikzylinders mit Druck weiterhin die Runge vom abgeklappten und den aufgeklappten Zustand bewegt wird. Damit wird durch das Ausfahren des Teleskopausschubs gleichzeitig die Runge aufgeklappt, was in einer besonders großen Zeitersparnis und in einer besonders leicht zu bedienenden Ausführungsform resultiert.

Durch die beiden letztgenannten Ausführungsformen, d.h. der Realisierung einer teleskopierbaren Runge mittels einer Schubstange oder mittels eines Pneumatik- oder Hydraulikzylinders wird gleichzeitig mit dem Aufklappen der Runge dieselbe gegen ein Umfallen gesichert. In anbetracht des Gewichts einer Runge können dadurch Beschädigungen am Fahrzeug und Verletzungen der Bedienperson verhindert werden.

Weitere bevorzugte Ausführungsformen ergeben sich aus den Unteransprüchen.

Im Nachfolgenden werden nunmehr Ausführungsbeispiele der vorliegenden Erfindung unter Bezugnahme auf die beigefügten Zeichnungen näher beschrieben. Es zeigen:

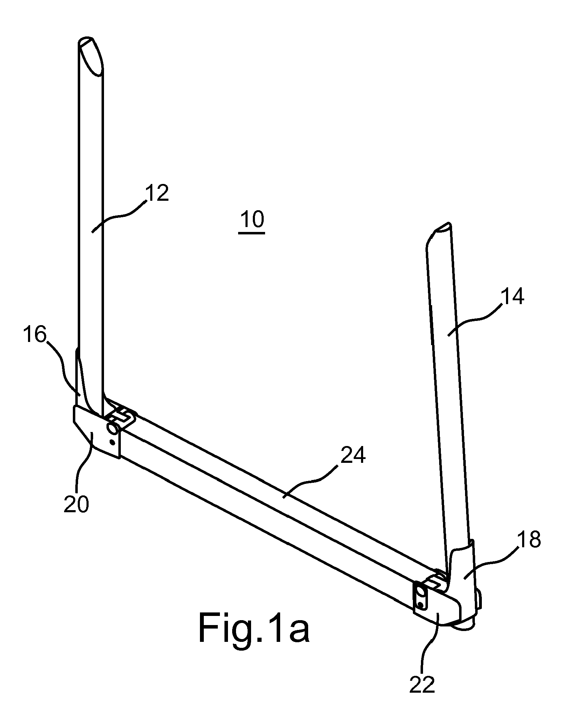

- Fig. 1a: in schematischer Darstellung ein Ausführungsbeispiel eines erfindungsgemäßen Rungenstocks mit aufgeklappten Rungen;

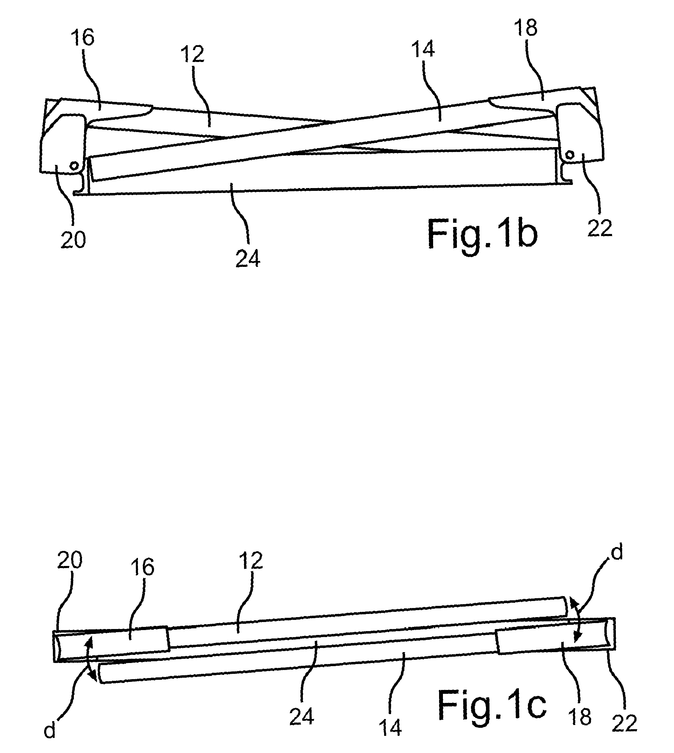

- Fig. 1 b: eine Ansicht von vorne des Rungenstocks von Fig. 1a mit abgeklappten Rungen;
- Fig. 1 c: eine Draufsicht auf den Rungenstock von Fig. 1a mit abgeklappten Rungen;

- Fig. 2a: eine Ansicht von vorne auf die an beiden Enden des Rungenschemels montierten Klappscharniere und damit verbundenen Rungentaschen ohne eingesetzte Rungen;
- Fig. 2b: die Kombination von Fig. 2a in Draufsicht;
- Fig. 3a: in schematischer Darstellung ein erstes Ausführungsbeispiel einer Runge mit einer teleskopierbaren Runge;
- Fig. 3b: in schematischer Darstellung ein zweites Ausführungsbeispiel einer teleskopierbaren Runge; und
- Fig. 3c: in schematischer Darstellung ein drittes Ausführungsbeispiel einer teleskopierbaren Runge.

In den verschiedenen Figuren werden für gleiche Bauelemente gleiche Bezugszeichen verwendet.

Fig. 1a zeigt in schematischer Darstellung ein Ausführungsbeispiel eines erfindungsgemäßen Rungenstocks 10. Dieser umfasst eine erste 12 und eine zweite Runge 14, die hohl ausgebildet sind und über eine jeweilige Rungentasche 16, 18 und ein jeweiliges Klappscharnier 20, 22 an einem Rungenschemel 24 befestigt sind. Die Rungen 12, 14 weisen im Ausführungsbeispiel einen im Wesentlichen ovalen Querschnitt auf, können jedoch auch einen runden oder rechteckigen Querschnitt aufweisen.

Fig. 1b zeigt eine Ansicht von vorne der Darstellung von Fig. 1a, während Fig. 1c eine Ansicht von oben der Darstellung von Fig. 1a zeigt. Aus Fig. 1b geht hervor, dass die beiden Rungen 12, 14 in abgeklapptem Zustand nebeneinander zu liegen kommen. Wie aus Fig. 1c deutlich zu erkennen, verlaufen die beiden Rungen 12, 14 in abgeklapptem Zustand im Wesentlichen parallel. Beide Rungen 12, 14 schließen mit dem Rungenschemel einen Winkel α von ungefähr 4 Grad ein.

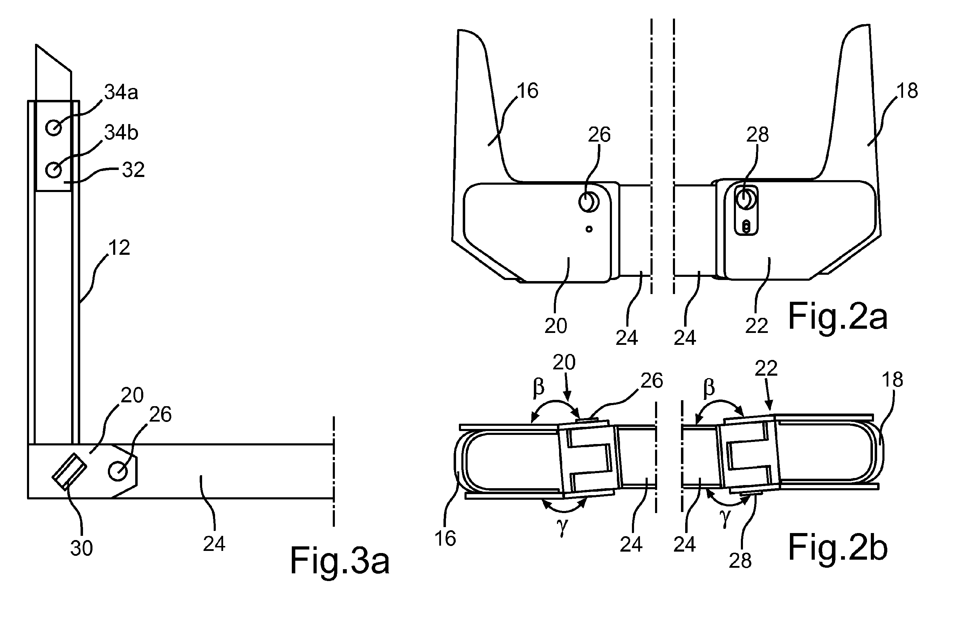

Fig. 2a zeigt eine Ansicht von vorne auf die Kombination aus jeweiliger Rungentasche 16, 18, jeweiligem Klappscharnier 20, 22 und verkürzt dargestelltem Rungenschemel 24. Deutlich sind jeweilige Drehbolzen 26, 28 zu erkennen. In der Darstellung von Fig. 2a sind keine Rungen eingesetzt, vielmehr könnten standardmäßige Rungen in den Rungentaschen 16, 18 aufgenommen werden.

Fig. 2b zeigt eine Draufsicht auf die Darstellung von Fig. 2a. Gut zu erkennen sind die Knicke im Verlauf der Kombination. So beträgt der jeweilige Winkel β ungefähr 176 Grad, während der jeweiligen Winkel γ ungefähr 184 Grad beträgt.

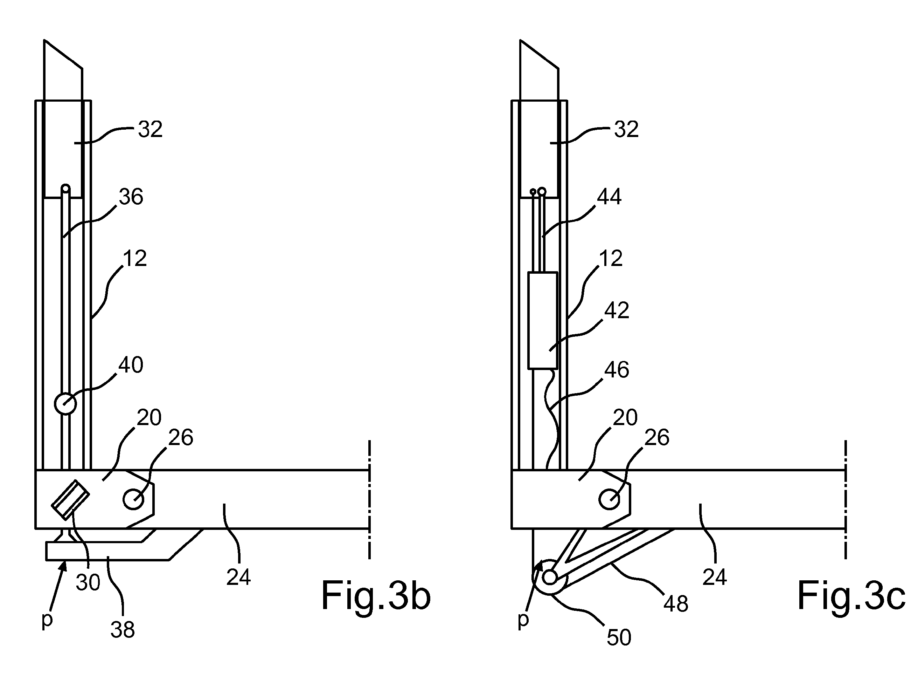

Die Figuren 3a bis 3c zeigen unterschiedliche Ausführungsformen einer teleskopierbaren Runge, wie sie besonders vorteilhaft in Verbindung mit einem erfindungsgemäßen Rungenstock eingesetzt werden können. Wie für den Fachmann offensichtlich, können derartige teleskopierbare Rungen jedoch, was die Ausführungsform von Fig. 3a betrifft, in Kombination mit einem beliebigen Rungenstock eingesetzt werden. Was die Ausführungsformen von Fig. 3b und 3c betrifft, können sie mit einem Rungenstock mit klappbaren Rungen eingesetzt werden. Letztere müssen dabei nicht so ausgebildet sein, dass ein gleichzeitiges Abklappen der beiden Rungen eines Rungenstocks ermöglicht wird.

Fig. 3a zeigt am Beispiel der linken Runge 12 der Ausführungsform der Figuren 1a bis 1 c ein erstes Ausführungsbeispiel einer teleskopierbaren Runge. Zur einfacheren Darstellung wurde lediglich die linke Seite des Rungenstocks 10 dargestellt, wobei die rechte Seite symmetrisch hierzu aufgebaut ist.

Zur Vereinfachung des Ab- und Aufklappens ist am Scharnier 20 eine Aufnahme 30 für eine Bedienvorrichtung, insbesondere eine Stange oder einen Handhebel, vorgesehen. In der Runge 12 ist ein Teleskopausschub 32 angeordnet, der mittels zweier manueller Klemmvorrichtungen 34a, 34b in der Runge 12 festgeklemmt werden kann.

Gemäß dem Ausführungsbeispiel von Fig. 3b ist eine Schubstange 36 vorgesehen, die einerseits mit dem Teleskopausschub 32 verbunden ist, andererseits am Punkt P an einem Anschlag 38 abgestützt ist, der mit dem Rungenschemel 24 fest verbunden ist.

Die Schubstange weist ein Gelenk 40 auf, um ihre Funktion während des gesamten Umklappvorgangs, d. h. sowohl beim Aufklappen als auch beim Abklappen, zu erfüllen.

Fig. 3c zeigt ein weiteres Ausführungsbeispiel einer teleskopierbaren Runge, bei dem ein Pneumatikzylinder 42 über eine Kolbenstange 44 mit dem Teleskopausschub 32 gekoppelt ist. Der Pneumatikzylinder 42 ist an der Innenseite der Runge 12 fest montiert. Dabei ist die Druckluftzuleitung mit 46 bezeichnet. Sie weist überdies ein Stahlseil 48 auf, das über eine Umlenkrolle 50 ebenfalls mit dem Teleskopausschub 32 gekoppelt ist. Dies führt dazu, dass bei Beaufschlagung des Pneumatikzylinders 42 mit Druck bei abgeklappter Runge 12 einerseits der Teleskopausschub 32 ausgefahren wird, dadurch das Stahlseil 48 gespannt wird, wodurch automatisch die Runge 12 aufgeklappt wird. Wird die Beaufschlagung mit Druck zurückgenommen, wird gleichzeitig die Runge abgeklappt, während der Teleskopausschub 32 eingeschoben wird. Anstelle eines Druckluftzylinders 42 kann auch eine entsprechende Hydraulikvorrichtung vorgesehen sein.

## Patentansprüche

1. Rungenstock umfassend einen Rungenschemel (24), der ein erstes und ein zweites Ende aufweist, und eine erste und eine zweite Runge (12, 14), wobei die erste Runge (12) mit dem ersten Ende des Rungenschemels (24) und die zweite Runge (14) mit dem zweiten Ende des Rungenschemels (24) gekoppelt ist,
**dadurch gekennzeichnet,**
**dass** die erste und die zweite Runge (12, 14) derart klappbar mit dem jeweiligen Ende des Rungenschemels (24) gekoppelt sind, dass beide Rungen (12, 14) gleichzeitig einklappbar sind.

2. Rungenstock nach Anspruch 1,
**dadurch gekennzeichnet,**
**dass** die erste und die zweite Runge (12, 14) derart klappbar mit dem jeweiligen Endes des Rungenschemels (24) gekoppelt sind, dass beide Rungen (12, 14) im eingeklappten Zustand nebeneinander anordenbar sind.

3. Rungenstock nach einem der Ansprüche 1 oder 2,
**dadurch gekennzeichnet,**
**dass** die erste Runge (12) und/oder die zweite Runge (14) im eingeklappten Zustand um einen vorgebbaren Winkel (α) gegenüber dem Rungenschemel (24) verschwenkt sind/ist.

4. Rungenstock nach Anspruch 3,
**dadurch gekennzeichnet,**
**dass** der Betrag des vorgebbaren Winkels (α) zwischen 3 Grad und 20 Grad, bevorzugt zwischen 3 Grad und 8 Grad beträgt.

5. Rungenstock nach einem der Ansprüche 3 oder 4,
**dadurch gekennzeichnet,**
**dass** mindestens ein Ende des Rungenschemels (24) eine Außenfläche in einem Winkel zur Längserstreckung des Rungenschemels (24) aufweist, der 90 Grad +/- dem vorgebbaren Winkel entspricht.

6. Rungenstock nach einem der Ansprüche 3 bis 5,
**dadurch gekennzeichnet,**
**dass** die Kopplung mindestens einer Runge (12; 14) mit dem zugehörigen Ende des Rungenschemels (24) ein mit dem Ende des Rungenschemels (24) gekoppeltes Klappscharnier (20; 22) und eine mit dem Klappscharnier (20; 22) gekoppelte Rungentasche (16; 18) umfasst, wobei die Runge (12; 14) in die Rungentasche (16; 18) eingesetzt ist, wobei das Klappscharnier (20; 22) gegenüber dem Rungenschemel (24) in dem vorgebbaren Winkel (α) angeordnet ist.

7. Rungenstock nach einem der vorhergehenden Ansprüche,
**dadurch gekennzeichnet,**
**dass** die Kopplung der Runge (12; 14) mit dem zugehörigen Ende des Rungenschemels (24) eine Aufnahme (30) für eine Bedienvorrichtung zum Umlegen der Runge (12; 14) aufweist.

8. Rungenstock nach einem der vorhergehenden Ansprüche,
**dadurch gekennzeichnet,**
**dass** weiterhin eine Federvorrichtung vorgesehen ist, die derart mit der Runge (12; 14) einerseits, bevorzugt mit der Rungentasche (16; 18), und dem Rungenschemel (24) andererseits gekoppelt ist, dass das Aufklappen der Runge (12; 14) durch die Federvorrichtung unterstützt wird.

9. Rungenstock nach einem der vorhergehenden Ansprüche,
**dadurch gekennzeichnet,**
**dass** mindestens eine Runge (12; 14) eine Teleskopiervorrichtung aufweist, die einen in der Runge (12; 14) angeordneten Teleskopausschub (32) umfasst.

10. Rungenstock nach Anspruch 9,
**dadurch gekennzeichnet,**
**dass** weiterhin eine manuelle Klemmvorrichtung (34a; 34b) vorgesehen ist, um den Teleskopausschub (32) zumindest in ausgeschobener Stellung lagefest zur Runge (12; 14) zu klemmen.

11. Rungenstock nach Anspruch 9,
**dadurch gekennzeichnet,**
**dass** weiterhin eine Schubstange (36) vorgesehen ist, die einerseits mit dem Teleskopausschub (32) gekoppelt ist und andererseits an einem Anschlag (38) für die Schubstange (36) abgestützt ist, derart, dass beim Aufklappen der Runge (12; 14) der Teleskopausschub (32) aus der Runge (12; 14) ausgeschoben wird.

12. Rungenstock nach Anspruch 11,
**dadurch gekennzeichnet,**
**dass** der Anschlag (38) lagefest mit dem Rungenschemel (24) gekoppelt ist.

13. Rungenstock nach einem der Ansprüche 11 oder 12,
**dadurch gekennzeichnet,**
**dass** die Schubstange (36) ein Gelenk (40) aufweist, um ein Abknicken der Schubstange (40) zu ermöglichen.

14. Rungenstock nach Anspruch 9,
**dadurch gekennzeichnet,**
**dass** weiterhin ein Pneumatik- oder Hydraulikzylinder (42) vorgesehen ist, der derart mit dem Teleskopausschub (32) gekoppelt ist, dass bei Beaufschlagung des Pneumatik- oder Hydraulikzylinders (42) der Teleskopausschub (32) aus der Runge (12; 14) ausgeschoben wird.

15. Rungenstock nach Anspruch 14,
**dadurch gekennzeichnet,**
**dass** der Pneumatik- oder Hydraulikzylinder (42) in der Runge (12; 14) angeordnet ist.

16. Rungenstock nach einem der Ansprüche 14 oder 15,
**dadurch gekennzeichnet,**
**dass** weiterhin ein Bandelement (48), insbesondere ein Seil, vorgesehen ist, das einerseits mit dem Teleskopausschub (32) gekoppelt ist und andererseits, bevorzugt über eine Umlenkrolle (50), mit dem Rungenschemel (24) gekoppelt ist, derart, dass beim Beaufschlagen des Pneumatik- oder Hydraulikzylinders (42) mit Druck weiterhin die Runge (12; 14) vom eingeklappten in den aufgeklappten Zustand bewegt wird.
